# EUROPÄISCHE PATENTSCHRIFT

(11) **EP 4 552 452 B1**
(45) Veröffentlichungstag und Bekanntmachung des Hinweises auf die Patenterteilung: **11.11.2026**
(21) Anmeldenummer: 24203429.6
(22) Anmeldetag: 30.09.2024
(51) Int. Cl.: A01B 69/00, A01B 69/04

(54) **LANDWIRTSCHAFTLICHE ARBEITSMASCHINE**
AGRICULTURAL MACHINE
MACHINE AGRICOLE

(30) Priorität: 08.11.2023 DE 102023130883
(43) Veröffentlichungstag der Anmeldung: 14.05.2025
(73) Patentinhaber: CLAAS KGaA mbH, 33428 Harsewinkel (DE)
(72) Erfinder: Bone, Sven, 49124 Georgsmarienhütte (DE); Korthals, Timo, 33818 Leopoldshöhe (DE); Redenius, Jannik, 32361 Pr. Oldendorf (DE); Lücke, Andreas, 33184 Altenbeken (DE); Skiba, Andreas, 33647 Bielefeld (DE); Schröder, Axel, 33332 Gütersloh (DE); Sensel, Uwe, 39104 Magdeburg (DE)
(74) Vertreter: CLAAS Gruppe

(56) Entgegenhaltungen:
- EP-A1- 3 871 481
- WO-A1-2023/119996
- CN-A- 107 627 957
- CN-A- 114 080 578

## Beschreibung

Die vorliegende Erfindung betrifft eine landwirtschaftliche Arbeitsmaschine, insbesondere einen Traktor, gemäß dem Oberbegriff des unabhängigen Patentanspruchs 1.

In der modernen Landwirtschaft sind stets Bestrebungen dahingehend vorhanden die Produktivität und Wirtschaftlichkeit der Arbeitsprozesse zu erhöhen. Im Zuge dieser Bestrebungen ist in den letzten Jahren zunehmend das Thema "Autonomie" in den Fokus der Landwirtschaft geraten. Es besteht der Wunsch landwirtschaftliche Arbeitsmaschinen einsetzen zu können, die einen Arbeitsauftrag auf dem Hof und/oder einem Feld autonom ausführen können, also ohne, dass ein Bediener in die Steuerung der landwirtschaftlichen Arbeitsmaschine eingreifen muss. Einige Konzepte solcher landwirtschaftlicher Arbeitsmaschinen, die in einem autonomen Betriebsmodus betrieben werden können, sehen keine am Chassis der Arbeitsmaschine angeordnete Kabine vor, sodass die Arbeitsmaschine stets unbemannt betrieben wird. Andere Konzepte sehen hingegen nach wie vor eine Kabine vor, wodurch sich die Möglichkeit ergibt neben einem autonomen Betriebsmodus auch einen manuellen Betriebsmodus, in welchem ein Bediener in der Kabine zumindest zeitweise in die Steuerung der landwirtschaftlichen Maschine eingreift, umzusetzen.

Ein wesentlicher Aspekt für den Betrieb einer landwirtschaftlichen Arbeitsmaschine in einem autonomen Betriebsmodus ist die Beobachtung des Umfelds der Arbeitsmaschine, da es insbesondere im Umfeld der Arbeitsmaschine zu sicherheitskritischen Betriebssituationen kommen kann, in denen die landwirtschaftliche Arbeitsmaschine im autonomen Betriebsmodus unmittelbar selbststätig reagieren muss. Für die Beobachtung des Umfelds einer Arbeitsmaschine ist es erforderlich eine hierfür geeignete Sensorik an der Arbeitsmaschine vorzusehen. Eine landwirtschaftliche Arbeitsmaschine mit einer solchen Sensorik ist beispielsweise aus der EP 3 871 481 A1 bekannt.

Die EP 3 871 481 A1 betrifft im Einzelnen ein landwirtschaftliches Fahrzeug mit einem vorderen LIDAR-Sensor, welcher einen vorausliegenden Feldbereich, also einen Bereich vor dem Fahrzeug, auf den sich das Fahrzeug zubewegt, scannt, und einem hinteren LIDAR-Sensor, welcher einen hinter dem Fahrzeug liegenden Feldbereich scannt, also einen hinteren Bereich, auf dem sich das Fahrzeug zuvor bewegt hat. Das Fahrzeug verfügt über ein GPS-System, welches eine Position und Koordinaten des gescannten Feldbereichs vor und hinter dem Fahrzeug bereitstellt. Eine Recheneinheit vergleicht die Sensordaten der Feldbereiche vor und hinter dem Fahrzeug, um dem Fahrzeug eine autonome Führung zu geben und/oder die von dem Fahrzeug durchgeführten landwirtschaftlichen Arbeiten zu automatisieren.

Besonders wichtig im Kontext einer Vermeidung von sicherheitskritischen Betriebssituationen und somit einem sicheren Betrieb der Arbeitsmaschine im autonomen Betriebsmodus ist speziell die Detektion von Objekten im Umfeld der landwirtschaftlichen Arbeitsmaschine, da eine Kollision zwischen der landwirtschaftlichen Arbeitsmaschine und Objekten im Umfeld der Arbeitsmaschine, die kein Erntegut bzw. Arbeitsmaterial darstellen, unbedingt vermieden werden muss. Insbesondere bei solchen landwirtschaftlichen Arbeitsmaschinen, die in einem autonomen Betriebsmodus betrieben werden können und auf einer klassischen Maschinenarchitektur mit einer Kabine basieren, ist eine zuverlässige Detektion von Objekten in allen potenziell auftretenden Betriebssituationen und bei allen potenziell auftretenden Umgebungsbedingungen/-verhältnissen während des Betriebs der landwirtschaftlichen Arbeitsmaschine im gesamten Umfeld der landwirtschaftlichen Arbeitsmaschine mit Herausforderungen an die Sensorik verbunden.

Vor allem Bewegungen und Schwingungen, die während des Betriebs der landwirtschaftlichen Arbeitsmaschine aus verschiedenen Quellen auf die landwirtschaftliche Arbeitsmaschine eingeprägt werden, schaffen Herausforderungen. Bei landwirtschaftlichen Arbeitsmaschinen mit einer klassischen Maschinenarchitektur, also mit einem Chassis und einer daran angeordneten Kabine, bewegen sich das Chassis und die Kabine der landwirtschaftlichen Arbeitsmaschine in aller Regel nicht gleichmäßig, sondern oftmals relativ zueinander. Hierdurch ergibt sich ein hoher Aufwand hinsichtlich der Auswertung von Sensordaten, was insbesondere im autonomen Betriebsmodus, in dem kein Bediener Einfluss auf die Steuerung der landwirtschaftlichen Maschine nimmt, und hier im Besonderen für den wesentlichen Aspekt der Objekterkennung kritisch ist.
Das Dokument CN 114 080 578 A offenbart automatische Fahrsysteme für Arbeitsfahrzeug.
Das Dokument WO 2023/119996 A1 offenbart ein Hindernisdetektionssystem, eine landwirtschaftliche Maschine und ein Hinderniserkennungsverfahren.
Das Dokument CN 107 627 957 A offenbart ein Arbeitsfahrzeug.
Das Dokument EP 3 871 481 A1 offenbart ein landwirtschaftliches Fahrzeug, welches mit einem Front- und Heck-3D-Bildsensor ausgestattet ist.

Ausgehend hiervon ist es demnach die Aufgabe der vorliegenden Erfindung die beschriebenen Nachteile des Standes der Technik auszuräumen und insbesondere eine zuverlässige und robuste Detektion von Objekten im Umfeld einer in einem autonomen Betriebsmodus betreibbaren landwirtschaftlichen Arbeitsmaschine mit einer Kabine zu gewährleisten.

Diese Aufgabe wird erfindungsgemäß durch die Merkmale des unabhängigen Patentanspruchs 1 gelöst, wobei vorteilhafte Weiterbildungen der erfindungsgemäßen landwirtschaftlichen Arbeitsmaschine Gegenstand der entsprechenden abhängigen Patentansprüche 2 bis 14 sind.

Demnach betrifft die vorliegende Erfindung eine landwirtschaftliche Arbeitsmaschine, insbesondere einen Traktor, mit einem Chassis und einer Kabine mit einem sich vom Frontbereich zum Heckbereich der Kabine erstreckenden Kabinendach, wobei die Kabine an dem Chassis angeordnet ist. Die landwirtschaftliche Arbeitsmaschine umfasst eine Steuereinrichtung, die dazu vorgesehen und eingerichtet ist, die landwirtschaftliche Arbeitsmaschine in einem autonomen Betriebsmodus zu betreiben. Die landwirtschaftliche Arbeitsmaschine umfasst zumindest ein Sensorsystem zur Detektion von Objekten im Umfeld der landwirtschaftlichen Arbeitsmaschine mit mehreren Sensoren, wobei das zumindest eine Sensorsystem mit der Steuereinrichtung zur Übertragung von Sensordaten verbunden ist. Die landwirtschaftliche Arbeitsmaschine ist dadurch gekennzeichnet, dass die Steuereinrichtung dazu vorgesehen und eingerichtet ist, die landwirtschaftliche Arbeitsmaschine im autonomen Betriebsmodus basierend auf den von dem zumindest einen Sensorsystem bereitgestellten Sensordaten anzusteuern, wobei das zumindest eine Sensorsystem auf einer Sensortechnologie basiert und sämtliche Sensoren des zumindest einen Sensorsystems entweder am Chassis oder an der Kabine der landwirtschaftlichen Arbeitsmaschine angeordnet sind.

Sämtliche Sensoren eines auf einer speziellen Sensortechnologie basierenden Sensorsystems an einer Baugruppe der landwirtschaftlichen Arbeitsmaschine anzuordnen, also wahlweise am Chassis oder an der Kabine, sorgt dafür, dass während des Betriebs der landwirtschaftlichen Arbeitsmaschine auf diese eingeprägte Schwingungen und Bewegungen, wenn überhaupt, nur zu geringen Relativbewegungen der Sensoren eines Sensorsystems zueinander führen, da sich die Sensoren gemeinsam mit der jeweiligen Baugruppe, an der sie angeordnet bzw. befestigt sind, bewegen. Sämtliche Sensoren des Sensorsystems führen somit im Wesentlichen identische Bewegungen während des Betriebs der landwirtschaftlichen Arbeitsmaschine aus. Dies ist insbesondere für die Detektion von Objekten im Umfeld der landwirtschaftlichen Arbeitsmaschine von erheblichem Vorteil, da der Rechenaufwand für die Verarbeitung der von den Sensoren eines Sensorsystems bereitgestellten Sensordaten geringgehalten werden und gleichzeitig die Detektion von Objekten zuverlässig erfolgen kann, was wesentlich für den Betrieb der der landwirtschaftlichen Arbeitsmaschine im autonomen Betriebsmodus ist.

Gemäß einer vorteilhaften Weiterbildung der Erfindung ist vorgesehen, dass sämtliche Sensoren des zumindest einen Sensorsystems in Fahrzeughöhenrichtung auf gleicher Höhe angeordnet sind, einen bezogen auf die Fahrzeughöhenrichtung identischen Neigungswinkel aufweisen und/oder ein identisches Sichtfeld aufweisen.

Die Anordnung von Sensoren auf gleicher Höhe, mit identischen Neigungswinkeln und/oder identischen Sichtfeldern sorgt für eine weitere Reduktion des Rechenaufwands bei der Verarbeitung der Sensordaten. Nicht nur, dass die Sensoren des Sensorsystems keine Relativbewegungen zueinander ausführen, sondern ferner die Tatsache, dass weitere Parameter identisch gewählt werden, sorgt dafür, dass Sensordaten verschiedener Sensoren des Sensorsystems einfacher miteinander in Verbindung gebracht werden können und somit die Detektion von Objekten grundsätzlich sowie die Zuverlässigkeit der Objekterkennung anhand der Sensordaten weiter verbessert werden kann.

Gemäß einer vorteilhaften Weiterbildung der Erfindung ist vorgesehen, dass eine Position der Sensoren, eine Ausrichtung der Sensoren, ein Sichtfeld der Sensoren und/oder eine Anzahl an Sensoren des zumindest einen Sensorsystems derart abhängig von der Geometrie der landwirtschaftlichen Arbeitsmaschine gewählt ist, dass die Detektion von Objekten im Umfeld der landwirtschaftlichen Arbeitsmaschine in einem Detektionsbereich erfolgt, welcher sich in einem Winkel von 360° um die landwirtschaftliche Arbeitsmaschine herum erstreckt.

Für einen sicheren Betrieb der landwirtschaftlichen Arbeitsmaschine im autonomen Betriebsmodus ist es von großer Bedeutung, dass Objekte nicht nur in einigen Bereichen im Umfeld der landwirtschaftlichen Arbeitsmaschine detektiert werden können. Vielmehr muss eine Detektion von Objekten zuverlässig im gesamten Umfeld der landwirtschaftlichen Arbeitsmaschine erfolgen. Die Maschinengeometrie sorgt dabei für gewisse Herausforderungen, da Bereiche des Umfelds der landwirtschaftlichen Arbeitsmaschine unterschiedlich gut ausgehend von verschiedenen Positionen an der landwirtschaftlichen Arbeitsmaschine einzusehen sind. Die Wahl der Position, der Ausrichtung des Sichtfelds und/oder der Anzahl an Sensoren abhängig von der Geometrie der landwirtschaftlichen Arbeitsmaschine stellt sicher, dass das gesamte Umfeld der landwirtschaftlichen Arbeitsmaschine, also auch Bereiche, die schwieriger einzusehen sind, zuverlässig im Hinblick auf die Detektion von Objekten mittels der Sensoren gescannt werden kann.

Gemäß einer vorteilhaften Weiterbildung der Erfindung ist vorgesehen, dass das Sichtfeld der Sensoren des zumindest einen Sensorsystems derart gewählt ist, dass sich die Sichtfelder zumindest einiger der Sensoren bereichsweise, vorzugsweise in den Randbereichen, überlappen.

Die Wahl der Sichtfelder der Sensoren derart, dass sich die Sichtfelder einiger Sensoren bereichsweise, vorzugsweise den Randbereichen, überlappen sorgt dafür, dass die guten Mittenbereiche der Sichtfelder der Sensoren für die Detektion von Objekten im Umfeld der landwirtschaftlichen Maschine genutzt werden können. Durch die Nutzung der Mittenbereiche der Sichtfelder kann die Zuverlässigkeit bei der Detektion von Objekten im Umfeld der Maschine gesteigert werden und Sensordaten bereitgestellt werden, die eine weitere tiefergehende Verarbeitung, beispielsweise eine Klassifikation von Objekten, mittels der Steuereinrichtung zulassen.

Gemäß einer vorteilhaften Weiterbildung der Erfindung ist vorgesehen, dass das zumindest eine Sensorsystem auf einer RaDAR-Technologie, einer LiDAR-Technologie oder einer Kamera-Technologie basiert.

Die genannten Technologien RaDAR, LiDAR und Kamera stellen für eine Detektion von Objekten vorteilhafte Sensortechnologien dar, mit jeweils unterschiedlichen Stärken aber mit insgesamt ausgewogenen Charakteristiken, wodurch jede Technologie grundsätzlich, sofern nur ein Sensorsystem an der landwirtschaftlichen Arbeitsmaschine vorgesehen sein sollte, auch allein für die Detektion von Objekten ungeachtet welcher Klasse geeignet ist.

Gemäß einer vorteilhaften Weiterbildung der Erfindung ist vorgesehen, dass die Sensoren eines auf der RaDar-Technologie basierenden Sensorsystems am Chassis der landwirtschaftlichen Arbeitsmaschine angeordnet sind.

Gemäß einer vorteilhaften Weiterbildung der Erfindung ist vorgesehen, dass die Sensoren des auf der RaDar-Technologie basierenden Sensorsystems in Fahrzeuglängsrichtung rechtsseitig und linksseitig einer Motorhaube der landwirtschaftlichen Arbeitsmaschine an einem frontseitigen Anbaurahmen des Chassis angeordnet sind.

Vorzugsweise ist vorgesehen, dass das auf der RaDar-Technologie basierende Sensorsystem vier Sensoren umfasst, wobei jeweils zwei Sensoren in Fahrzeuglängsrichtung rechtsseitig und linksseitig der Motorhaube an dem frontseitigen Anbaurahmen des Chassis angeordnet sind.

Gemäß einer vorteilhaften Weiterbildung der Erfindung ist vorgesehen, dass die Sensoren eines auf der LiDar-Technologie basierenden Sensorsystems an der Kabine der landwirtschaftlichen Arbeitsmaschine angeordnet sind.

Gemäß einer vorteilhaften Weiterbildung der Erfindung ist vorgesehen, dass zumindest zwei Sensoren des auf der LiDar-Technologie basierenden Sensorsystems in Fahrzeuglängsrichtung rechtsseitig und linksseitig der Kabine, vorzugsweise im Bereich der A-Säulen der Kabine sowie in Fahrzeughöhenrichtung im Bereich einer unteren Hälfte der Kabine, angeordnet sind.

Vorzugsweise ist vorgesehen, dass das auf der LiDar-Technologie basierende Sensorsystem drei Sensoren umfasst, wobei ein dritter Sensor auf dem Kabinendach im Frontbereich der Kabine angeordnet ist.

Gemäß einer vorteilhaften Weiterbildung der Erfindung ist vorgesehen, dass die Sensoren eines auf der Kamera-Technologie basierenden Sensorsystems an der Kabine der landwirtschaftlichen Arbeitsmaschine angeordnet sind.

Gemäß einer vorteilhaften Weiterbildung der Erfindung ist vorgesehen, dass die Sensoren des auf der Kamera-Technologie basierenden Sensorsystems an dem Kabinendach im Frontbereich und/oder Heckbereich der Kabine angeordnet sind.

Vorzugsweise ist vorgesehen, dass das auf der Kamera-Technologie basierende Sensorsystem acht Sensoren umfasst, von denen fünf Sensoren in dem Frontbereich der Kabine entlang einer vorderen Dachkante und drei Sensoren in dem Heckbereich der Kabine entlang einer hinteren Dachkante angeordnet sind.

Gemäß einer vorteilhaften Weiterbildung der Erfindung ist vorgesehen, dass die landwirtschaftliche Arbeitsmaschine drei Sensorsysteme zur Detektion von Objekten im Umfeld der landwirtschaftlichen Arbeitsmaschine mit jeweils mehreren Sensoren umfasst, wobei ein erstes Sensorsystem auf der RaDar-Technologie, ein zweites Sensorsystem auf der LiDAR-Technologie und ein drittes Sensorsystem auf der Kamera-Technologie basiert, wobei vorzugsweise die Sensoren des dritten auf der Kamera-Technologie basierenden Sensorsystems örtlich in der Nähe der Sensoren des zweiten auf der LiDAR-Technologie basierenden Sensorsystems angeordnet sind.

Die Nutzung einer RaDAR-Technologie, einer LiDAR-Technologie oder einer Kamera-Technologie als Sensortechnologie für das zumindest eine Sensorsystem, wobei jede Sensortechnologie unterschiedliche Stärken bei der Detektion von Objekten im Umfeld der landwirtschaftlichen Arbeitsmaschine mit sich bringt, sorgt in Kombination mit der spezifischen Anbringung abhängig von der Sensortechnologie dafür, dass die jeweilige Sensortechnologie ihre Stärken im Hinblick auf die Detektion von Objekten bestmöglich in Anbetracht der Maschinengeometrie ausspielen kann. Die Detektion von Objekten wird somit insgesamt in allen Betriebssituationen und bei allen Umgebungsverhältnissen/-bedingungen bestmöglich abgesichert, wodurch die landwirtschaftliche Arbeitsmaschine im autonomen Betriebsmodus stets angemessen und zuverlässig, ohne Eingriff eines Bedieners, reagieren kann. Insbesondere dann, wenn die drei Sensortechnologien RaDAR, LiDAR und Kamera mittels dreier Sensorsysteme kombiniert werden, stellt sich eine in besonders hohem Maße zuverlässige qualitativ hochwertige Detektion von Objekten in allen möglichen Betriebssituationen und bei allen möglichen Umgebungsverhältnissen/-bedingungen während des Betriebs der landwirtschaftlichen Arbeitsmaschine im autonomen Betriebsmodus ein.

Gemäß einer vorteilhaften Weiterbildung der Erfindung ist vorgesehen, dass die Sensoren des zumindest einen Sensorsystems mittels einer Bügelstruktur entweder am Chassis oder an der Kabine angeordnet sind.

Gemäß einer vorteilhaften Weiterbildung der Erfindung ist vorgesehen, dass die landwirtschaftliche Arbeitsmaschine einen am Chassis angeordneten Inertialsensor zur Erfassung von Eigenbewegungen des Chassis und einen an der Kabine angeordneten Inertialsensor zur Erfassung von Eigenbewegungen der Kabine umfasst, wobei die Inertialsensoren jeweils zur Übertragung von Sensordaten mit der Steuereinrichtung verbunden sind, wobei die Steuereinrichtung dazu vorgesehen und eingerichtet ist, die von den Sensoren des zumindest einen Sensorsystems bereitgestellten Sensordaten anhand der Sensordaten der Inertialsensoren in ein globales Koordinatensystem zu transferieren.

Die Nutzung von Inertialsensoren zur Erfassung von Eigenbewegungen und die Verwendung der Sensordaten dieser Inertialsensoren seitens der Steuereinrichtung ermöglicht es auftretende Relativbewegungen zwischen Sensoren durch die Transformation in ein globales Koordinatensystem herauszurechnen. Hierdurch ergibt sich eine deutlich verbesserte Genauigkeit bei der Verarbeitung der Sensordaten und somit eine zuverlässigere Detektion von Objekten im Umfeld der landwirtschaftlichen Arbeitsmaschine während eines Betriebs der landwirtschaftlichen Arbeitsmaschine im autonomen Betriebsmodus.

Die vorliegende Erfindung wird nachstehend anhand der in den Figuren abgebildeten Ausführungsformen näher beschrieben.

Es zeigen:
- FIG. 1: eine schematische und exemplarische Darstellung einer erfindungsgemäßen landwirtschaftlichen Arbeitsmaschine, die sowohl in einem manuellen Betriebsmodus als auch in einem autonomen Betriebsmodus betrieben werden kann;
- FIG. 2: eine schematische und exemplarische Darstellung eines Frontbereichs einer Kabine der landwirtschaftlichen Arbeitsmaschine gemäß FIG. 1 mit Sensoren mehrerer Sensorsysteme zur Detektion von Objekten im Umfeld der landwirtschaftlichen Arbeitsmaschine; und
- FIG. 3: eine schematische und exemplarische Darstellung eines Heckbereichs der Kabine der landwirtschaftlichen Arbeitsmaschine gemäß FIG. 1 mit Sensoren eines Sensorsystems zur Detektion von Objekten im Umfeld der landwirtschaftlichen Arbeitsmaschine; und

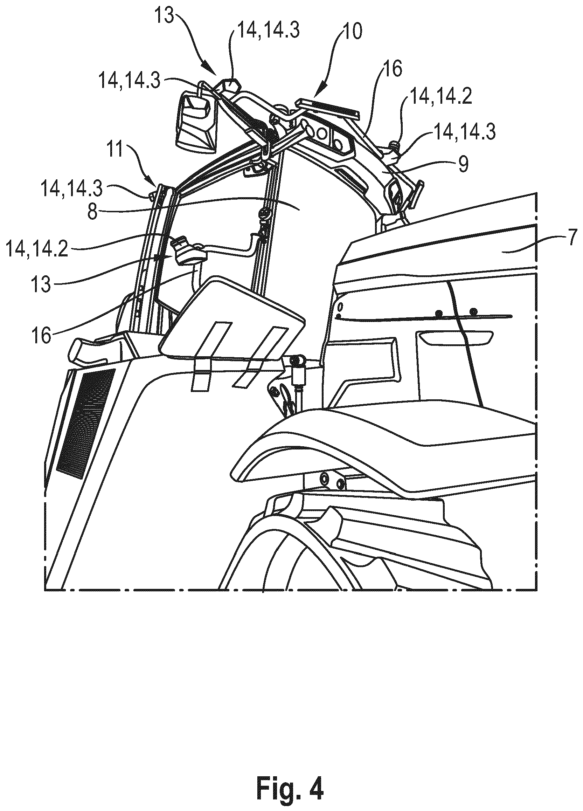

- FIG. 4: eine schematische und exemplarische Darstellung eines seitlichen Bereichs der Kabine der landwirtschaftlichen Arbeitsmaschine gemäß FIG. 1 mit Sensoren mehrerer Sensorsysteme zur Detektion von Objekten im Umfeld der landwirtschaftlichen Arbeitsmaschine.

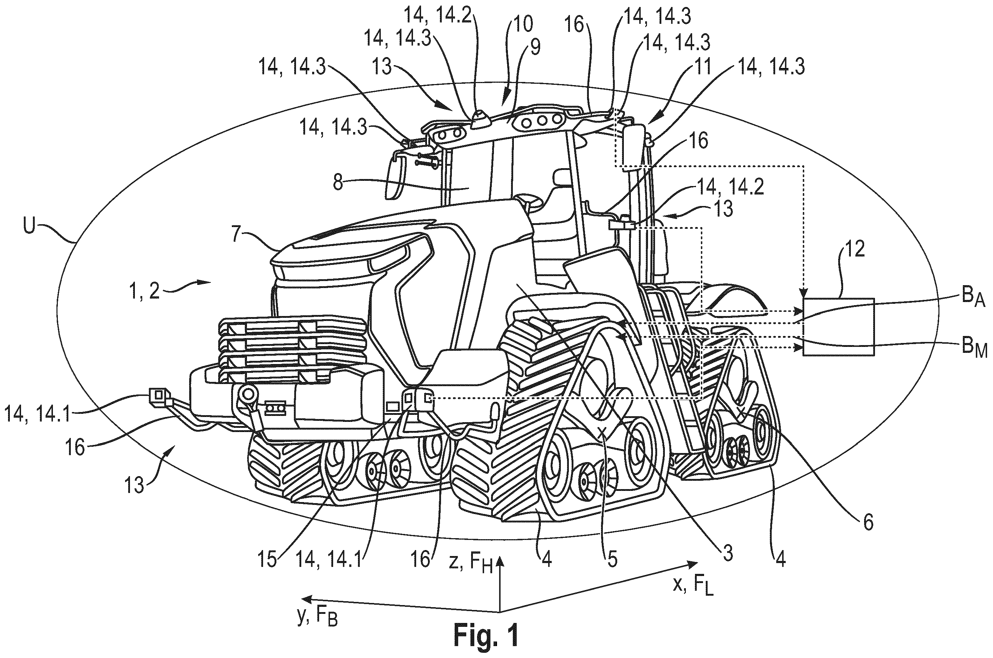

FIG. 1 zeigt eine erfindungsgemäße landwirtschaftliche Arbeitsmaschine 1 in Gestalt eines Traktors 2 in einer schematischen und exemplarischen Darstellung, wobei der grundsätzliche Aufbau einer als Traktor 2 ausgeführten landwirtschaftlichen Arbeitsmaschine 1 als dem Fachmann bekannt angesehen wird. Die erfindungsgemäße landwirtschaftliche Arbeitsmaschine 1 kann anhand von drei Erstreckungsrichtungen räumlich definiert werden, die durch ein Koordinatensystem in FIG. 1 beispielhaft kenntlich gemacht sind. Die erste Erstreckungsrichtung ist dabei die Längsrichtung der landwirtschaftlichen Arbeitsmaschine 1, im Folgenden auch als Fahrzeuglängsrichtung F_{L} bezeichnet, die in x-Achsenrichtung verläuft, die zweite Erstreckungsrichtung ist die Breitenrichtung der landwirtschaftlichen Arbeitsmaschine 1, im Folgenden auch als Fahrzeugbreitenrichtung F_{B} bezeichnet, die in y-Achsenrichtung verläuft, und die dritte Erstreckungsrichtung ist die Höhenrichtung der landwirtschaftlichen Arbeitsmaschine 1, im Folgenden auch als Fahrzeughöhenrichtung F_{H} bezeichnet, die in z-Achsenrichtung verläuft.

Die landwirtschaftliche Arbeitsmaschine 1 umfasst unter anderem ein Chassis 3, Bodeneingriffsmittel 4, die einer Vorderachse 5 und einer Hinterachse 6 zugeordnet sind und in den FIGs. in Gestalt von Raupenlaufwerken dargestellt sind, eine am Chassis 3 angeordnete Motorhaube 7 sowie eine am Chassis 3 angeordnete Kabine 8 mit einem Kabinendach 9, welches sich vom Frontbereich 10 der Kabine 8 zum Heckbereich 11 der Kabine 8 erstreckt. Die Kabine 8 kann mittels - in den FIGs. nicht dargestellten - Dämpfungselementen am Chassis 3 angeordnet sein. In der Kabine 8 kann sich ein - in den FIGs. nicht dargestellter - Bediener der landwirtschaftlichen Arbeitsmaschine 1 zur Steuerung derselben aufhalten kann. Hierzu sind innerhalb der Kabine 8 üblicherweise eine oder mehrere - in den FIGs. ebenfalls nicht dargestellte - Bedien- und Steuereinrichtungen zur Bedienung und Steuerung der landwirtschaftlichen Arbeitsmaschine 1 vorgesehen.

Wesentlich für die erfindungsgemäße landwirtschaftliche Arbeitsmaschine 1 ist nunmehr, dass diese nicht nur in einem manuellen Betriebsmodus B_{M}, also in einem Betriebsmodus, in welchem während des Betriebs der landwirtschaftlichen Arbeitsmaschine 1 zumindest zeitweise ein Eingriff seitens des Bedieners in die Steuerung der landwirtschaftlichen Arbeitsmaschine 1, sondern auch in einem autonomen Betriebsmodus B_{A} betrieben werden kann. Der autonome Betriebsmodus B_{A} der landwirtschaftlichen Arbeitsmaschine 1 ist im Rahmen der Erfindung als ein Betriebsmodus definiert, welcher während des Betriebs der landwirtschaftlichen Arbeitsmaschine 1 keinen Eingriff seitens des Bedieners in die Steuerung der landwirtschaftlichen Arbeitsmaschine 1 erfordert, weder für den Antrieb und die Spurführung der landwirtschaftlichen Arbeitsmaschine 1 noch für die Ansteuerung von - in den FIGs. nicht dargestellten - Arbeitsaggregaten zur Ausführung von Arbeitsaufträgen. Der autonome Betriebsmodus B_{A} der erfindungsgemäßen landwirtschaftlichen Arbeitsmaschine 1 entspricht demnach dem Betrieb einer unbemannten autonomen landwirtschaftlichen Arbeitsmaschine.

Damit die landwirtschaftliche Arbeitsmaschine 1 im autonomen Betriebsmodus B_{A} betrieben werden kann, umfasst die landwirtschaftliche Arbeitsmaschine 1 eine Steuereinrichtung 12. Diese Steuereinrichtung 12 ist demnach dazu vorgesehen und eingerichtet, die landwirtschaftliche Arbeitsmaschine 1 in dem autonomen Betriebsmodus B_{A} zu betreiben. Die Steuereinrichtung 12 ist dazu vorgesehen und eingerichtet, verschiedene Daten von verschiedenen Datenquellen drahtlos und/oder kabelgebunden zu empfangen und diese zur Ansteuerung der landwirtschaftlichen Arbeitsmaschine 1 im autonomen Betriebsmodus B_{A} zu verarbeiten. Die Steuereinrichtung 12 kann auch dazu vorgesehen und eigerichtet sein, Daten zu empfangen und zu verarbeiten, die für die Ansteuerung im manuellen Betriebsmodus B_{M} der landwirtschaftlichen Arbeitsmaschine 1 benötigt werden. Hierfür kann allerdings auch eine von der Steuereinrichtung 12 separate Steuereinrichtung vorgesehen sein.

Ein wesentlicher Aspekt für den Betrieb der landwirtschaftlichen Arbeitsmaschine 1 im autonomen Betriebsmodus B_{A}, ungeachtet dessen an welchen Orten, also beispielsweise auf einem Hof, auf öffentlichen Straßen und Wegen und/oder einem Feld, die landwirtschaftliche Arbeitsmaschine 1 im autonomen Betriebsmodus B_{A} betrieben wird, ist die Detektion von Objekten im Umfeld U der landwirtschaftlichen Arbeitsmaschine 1. Damit die Detektion von Objekten im Umfeld U der landwirtschaftlichen Arbeitsmaschine 1 möglich ist, ist es erforderlich, dass die landwirtschaftliche Arbeitsmaschine 1 eine Sensorik umfasst.

Die erfindungsgemäße landwirtschaftliche Arbeitsmaschine 1 umfasst zumindest ein Sensorsystem 13 zur Detektion von Objekten im Umfeld U der landwirtschaftlichen Arbeitsmaschine 1. Das Sensorsystem 13 umfasst dabei mehrere Sensoren 14 und basiert weiterhin auf einer spezifischen Sensortechnologie. Mit anderen Worten, die Sensoren 14 des Sensorsystems 13 sind Sensoren 14 einer gleichen Sensortechnologie. Das Sensorsystem 13 ist mit der Steuereinrichtung 12 zur Übertragung von Sensordaten verbunden. Die Steuereinrichtung 12 ist somit dazu vorgesehen und eingerichtet, basierend auf den von dem zumindest einen Sensorsystem 13 bereitgestellten Sensordaten die landwirtschaftliche Arbeitsmaschine 1 im autonomen Betriebsmodus B_{A} anzusteuern, also demnach abhängig von der Objektsituation im Umfeld U der landwirtschaftlichen Arbeitsmaschine 1.

Während des Betriebs der landwirtschaftliche Arbeitsmaschine 1 im autonomen Betriebsmodus B_{A} werden, wie auch während des Betriebs im manuellen Betriebsmodus B_{M}, Bewegungen und Schwingungen aus verschiedenen Quellen auf die landwirtschaftliche Arbeitsmaschine 1 eingeprägt. Aufgrund der klassischen Maschinenarchitektur der landwirtschaftlichen Arbeitsmaschine 1 mit einem Chassis 3 und einer daran angeordneten Kabine 8, bewegen sich das Chassis 3 und die Kabine 8 der landwirtschaftlichen Arbeitsmaschine 1 in aller Regel nicht gleichmäßig, sondern oftmals relativ zueinander. Insbesondere bei einer Lagerung der Kabine 8 an dem Chassis 3 über zwischengeschaltete Dämpfungselemente können starke Relativbewegungen beider Baugruppen zueinander auftreten. Sensoren, die an diesen Baugruppen befestigt sind, bewegen sich demnach in manchen Betriebssituationen stark relativ zueinander. Insbesondere dann, wenn Sensoren zur Detektion von Objekten im Umfeld U der landwirtschaftlichen Arbeitsmaschine 1, welche die gleiche Sensortechnologie nutzen, sowohl am Chassis 3 als auch an der Kabine 8 angeordnet wären, würde durch die Relativbewegungen der Sensoren zueinander ein erheblicher Aufwand bei der Verarbeitung der Sensordaten entstehen. Um diesen nachteiligen Umstand Rechnung zu tragen, ist es erfindungsgemäß vorgesehen, dass sämtliche Sensoren 14 des Sensorsystems 13 entweder am Chassis 3 oder an der Kabine 8 der landwirtschaftlichen Arbeitsmaschine 1 angeordnet sind. Relativbewegungen zwischen Sensoren 14 einer gleichen Sensortechnologie können somit vorzugsweise vollständig, zumindest jedoch weitestgehend reduziert werden, wodurch eine deutlich ressourceneffizientere Verarbeitung der Sensordaten möglich wird und somit eine stets zuverlässige Detektion von Objekten im Umfeld U der landwirtschaftlichen Arbeitsmaschine 1 in allen Betriebssituationen und bei allen Umgebungsverhältnissen/-bedingungen während eines Betriebs der landwirtschaftlichen Arbeitsmaschine 1 im autonomen Betriebsmodus B_{A} erfolgen kann.

Um den Aufwand bei der Verarbeitung der Sensordaten weiter zu reduzieren, ist es als vorteilhaft anzusehen, die Sensoren 14 des zumindest einen Sensorsystems 13 spezifisch anzuordnen. So ist es insbesondere als vorteilhaft anzusehen, wenn sämtliche Sensoren 14 des zumindest einen Sensorsystems 13 in Fahrzeughöhenrichtung F_{H} auf gleicher Höhe angeordnet sind. Ergänzend oder alternativ hierzu ist es als vorteilhaft anzusehen, wenn sämtliche Sensoren 14 des zumindest einen Sensorsystems 13 einen bezogen auf die Fahrzeughöhenrichtung F_{H} identischen Neigungswinkel aufweisen. Weiter ergänzend oder alternativ hierzu ist es als vorteilhaft anzusehen, wenn sämtliche Sensoren 14 des zumindest einen Sensorsystems 13 ein identisches Sichtfeld ("Field of View" (FOV)) aufweisen. Bezüglich des Sichtfeldes der Sensoren 14 ist es weiterhin für die Zuverlässigkeit bei der Detektion von Objekten im Umfeld U der landwirtschaftlichen Arbeitsmaschine 1 als vorteilhaft anzusehen, wenn das Sichtfeld der Sensoren 14 des zumindest einen Sensorsystems 13 derart gewählt ist, dass sich die Sichtfelder einiger der Sensoren 14 bereichsweise, vorzugsweise in den Randbereichen, überlappen. Hierdurch können die besonders guten Mittenbereiche der Sichtfelder der Sensoren 14 für die Detektion von Objekten im Umfeld U der landwirtschaftlichen Arbeitsmaschine 1 genutzt werden.

Da die Detektion von Objekten nicht nur in einem bestimmten Bereich im Umfeld U der landwirtschaftlichen Arbeitsmaschine 1 erfolgen soll, sondern vielmehr im gesamten Umfeld U der landwirtschaftlichen Arbeitsmaschine 1, die Detektion von Objekten im Umfeld U also in einem Detektionsbereich erfolgen soll, welcher sich in einem Winkel von 360° um die landwirtschaftliche Arbeitsmaschine 1 herum erstreckt, sollte die Ausgestaltung des zumindest einen Sensorsystems 13 abhängig von der Geometrie der landwirtschaftlichen Arbeitsmaschine 1 vorgenommen werden. Dabei sind insbesondere die Position der Sensoren 14, eine Ausrichtung der Sensoren 14, das Sichtfeld ("Field of View" (FOV)) der Sensoren 14 und/oder eine Anzahl an Sensoren 14 des zumindest einen Sensorsystem 13 in Abhängigkeit der Geometrie der landwirtschaftlichen Arbeitsmaschine 1 so zu wählen, dass Objekte im gesamten Umfeld U der landwirtschaftlichen Arbeitsmaschine 1 detektiert werden können.

Um die Betriebssicherheit im autonomen Betriebsmodus B_{A} zu erhöhen, kann es auch vorgesehen sein, dass die landwirtschaftliche Arbeitsmaschine 1 weitere Sensorsysteme 13 zur Detektion von Objekten im Umfeld U der landwirtschaftlichen Arbeitsmaschine 1 mit jeweils mehreren Sensoren 14 umfasst, wie beispielhaft in FIG. 1 dargestellt. Auch diese weiteren Sensorsysteme 13 sind mit der Steuereinrichtung 12 zur Übertragung von Sensordaten verbunden, sodass die Steuereinrichtung 12 dazu vorgesehen und eingerichtet ist, für die Ansteuerung der landwirtschaftlichen Arbeitsmaschine 1 im autonomen Betriebsmodus B_{A} auch Sensordaten von diesen weiteren Sensorsystemen 13 zu berücksichtigen. Auch bei einer Ausgestaltung mit weiteren Sensorsystemen 13, beispielsweise wie dargestellt mit drei Sensorsystemen 13, gilt, dass das jedes Sensorsystem 13 auf einer speziellen Sensortechnologie basiert, die Sensoren 14 des Sensorsystems 14 somit Sensoren der gleichen Sensortechnologie sind. Sofern mehrere Sensorsysteme 13 zur Detektion von Objekten im Umfeld U der landwirtschaftlichen Arbeitsmaschine 1 vorgesehen sind, basieren die Sensorsysteme 13 auf verschiedenen Sensortechnologien. Das heißt, jedes verwendete Sensorsystem 13 basiert auf einer eigenen Sensortechnologie, die von der Sensortechnologie der anderen verwendeten Sensorsysteme 13 verschieden ist.

Die Steuereinrichtung 12 kann dazu vorgesehen und eingerichtet sein, die von den Sensorsystemen 13 bereitgestellten Sensordaten zur Detektion von Objekten im Umfeld U der landwirtschaftlichen Arbeitsmaschine 1 entweder redundant oder gemeinsam zu verarbeiten. Bei einer redundanten Verarbeitung werden die Sensordaten verschiedener Sensoren 14 und/oder verschiedener Sensorsysteme 13 jeweils für sich auf Objekte im Umfeld U der landwirtschaftlichen Arbeitsmaschine 1 hin analysiert, wodurch eine Absicherung bei der Detektion von Objekten im Umfeld U der landwirtschaftlichen Arbeitsmaschine 1 möglich wird. Bei einer gemeinsamen Verarbeitung werden die Sensordaten verschiedener Sensoren 14 und/oder verschiedener Sensorsysteme 13 miteinander verwoben und ein hieraus entstehender angereicherter Datensatz dann auf Objekte im Umfeld U der landwirtschaftlichen Arbeitsmaschine 1 hin analysiert, wodurch die Genauigkeit der Detektion von Objekten erhöht werden kann.

Die Sensortechnologien, auf denen das zumindest eine Sensorsystem 13 basieren kann, sind vorzugsweise eine RaDAR-Technologie, eine LiDAR-Technologie oder eine Kamera-Technologie. Mit anderen Worten, basiert ein Sensorsystem 13 auf der RaDAR-Technologie so sind sämtliche der Sensoren 14 dieses Sensorsystems 13 RaDAR-Sensoren 14.1. Basiert ein Sensorsystem 13 hingegen auf der LiDAR-Technologie so sind sämtliche der Sensoren 14 dieses Sensorsystems 13 LiDAR-Sensoren 14.2. Basiert ein Sensorsystem 13 auf der Kamera-Technologie so sind sämtliche Sensoren 14 dieses Sensorsystems 13 Kamera-Sensoren 14.3, insbesondere Monokameras und/oder Stereokameras.

Für eine betriebssichere Detektion von Objekten im Umfeld U der landwirtschaftlichen Arbeitsmaschine 1 im autonomen Betriebsmodus B_{A} ist es vorteilhaft Sensortechnologien nach gewissen Kriterien auszuwählen. Von Vorteil ist es insbesondere eine Sensortechnologie für das zumindest eine Sensorsystem 13 zu wählen, welche die Detektion von Objekten im Umfeld U der landwirtschaftlichen Arbeitsmaschine 1 unabhängig von äußeren Umgebungseinflüssen erlaubt, welche die Detektion von Objekten im weiteren Umfeld der landwirtschaftlichen Arbeitsmaschine 1, vorzugsweise einem Umfeld U der landwirtschaftlichen Arbeitsmaschine 1 mit einem Radius von bis zu 32 m ausgehend von der landwirtschaftlichen Arbeitsmaschine 1, erlaubt und/oder welche Sensordaten bereitstellt, die eine Klassifikation von im Umfeld U der landwirtschaftlichen Arbeitsmaschine 1 detektierten Objekten mittels der Steuereinrichtung 12 erlaubt. Die Steuereinrichtung 12 kann zur Klassifikation von detektierten Objekten verschiedene Methoden oder Algorithmen verwenden, die wahlweise auf klassischer Objekterkennung oder künstlicher Intelligenz basieren. Vorzugsweise verwendet die Steuereinrichtung 12 ein lernfähiges künstliches neuronales Netz zur Klassifikation von detektierten Objekten.

Bezugnehmend auf die zuvor genannten bevorzugten Kriterien bei der Wahl der Sensortechnologie und die bevorzugten Sensortechnologien RaDAR-Technologie, LiDAR-Technologie und Kamera-Technologie verhält es sich so, dass ein Sensorsystem 13, welches auf der RaDAR-Technologie basiert, seine Stärken insbesondere in einer von äußeren Umgebungseinflüssen unabhängigen Detektion von Objekten im Umfeld U der landwirtschaftlichen Arbeitsmaschine 1 entfaltet. Schwächen entfaltet ein auf der RaDAR-Technologie basierendes Sensorsystem 13 hingegen beispielsweise dann, wenn eine Objektklassifikation anhand der Sensordaten mittels der Steuereinrichtung 12 durchgeführt werden soll. Ein auf einer Kamera-Technologie basierendes Sensorsystem 13 liefert hingegen Sensordaten, die sich besonders gut für die Durchführung einer Klassifikation von detektierten Objekten eignen. Schwächen hat ein Sensorsystem 13, welches auf der Kamera-Technologie basiert, hingegen beispielsweise bei einer Detektion von Objekten, die unabhängig von äußeren Umgebungseinflüssen sein soll. Ein auf der LiDAR-Technologie basierendes Sensorsystem 13 eignet sich besonders gut für die Detektion von Objekten im weiteren Umfeld der landwirtschaftlichen Arbeitsmaschine 1. Schwächen eines Sensorsystems 13, welches auf der LiDAR-Technologie basiert, sind beispielsweise jedoch die hohen Investitionskosten und der benötigte Bauraumbedarf.

Sofern die Steuereinrichtung 12 von einem Sensorsystem 13 Sensordaten erhält, die eine Klassifikation von detektierten Objekten erlaubt, ist die Steuereinrichtung 12 dazu vorgesehen und eingerichtet, diese Sensordaten einer mehrstufigen Klassifikation zu unterziehen. Ein besonders wichtiger Aspekt im Kontext der Detektion von Objekten im autonomen Betriebsmodus B_{A} ist darin zu sehen, lebende Objekte im Umfeld U der landwirtschaftlichen Arbeitsmaschine 1 zuverlässig zu bestimmen, da bei der Detektion von lebenden Objekten der Betrieb umgehend unterbrochen bzw. gestoppt werden muss. Die Steuereinrichtung 12 ist demnach dazu vorgesehen und eingerichtet, in einer ersten Stufe der Klassifikation von detektierten Objekten im Umfeld U der landwirtschaftlichen Arbeitsmaschine 1 lediglich zwischen lebenden und nicht-lebenden Objekten zu unterscheiden. Weitere sich daran anschließende Stufen der mittels der Steuereinrichtung 12 durchführbaren Klassifikation können dann eine Unterscheidung zwischen verschiedenen Klassen von lebenden und nicht-lebenden Objekten ermöglichen.

Bezugnehmend auf die zuvor erwähnten bevorzugten Sensortechnologien RaDAR, LiDAR oder Kamera, sind gewisse Positionen für die Anordnung eines Sensorsystems 13 unter Berücksichtigung der Maschinenarchitektur als bevorzugt anzusehen:

Sofern ein auf der RaDAR-Technologie basierendes Sensorsystem 13 verwendet wird, sollten die RaDAR-Sensoren 14.1 dieses Sensorsystems 13 am Chassis 3 der landwirtschaftlichen Arbeitsmaschine 1 angeordnet sein. Das am Chassis 3 angeordnete auf der RaDAR-Technologie basierende Sensorsystem 13 bzw. deren RaDAR-Sensoren 14.1 können dabei, wie in den FIGs. dargestellt, frontseitig der landwirtschaftlichen Arbeitsmaschine 1 am Chassis 3, vorzugsweise rechtsseitig und linksseitig der Motorhaube 7 an einem frontseitigen Anbaurahmen 15 des Chassis 3, angeordnet sein. Das auf der RaDAR-Technologie basierende Sensorsystem 13 umfasst dabei insbesondere vier Sensoren 14.1, von denen jeweils zwei Sensoren 14.1 in Fahrzeuglängsrichtung F_{L} rechtsseitig und linksseitig der Motorhaube 7 an dem frontseitigen Anbaurahmen 15 des Chassis 3 angeordnet sind.

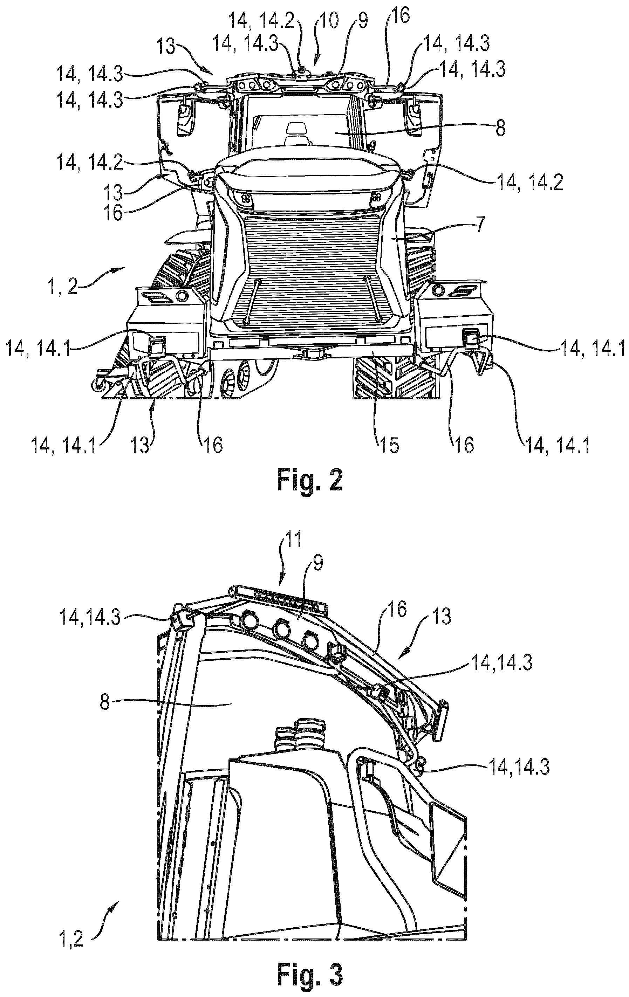

Sofern ein auf der LiDAR-Technologie basierendes Sensorsystem 13 verwendet wird, sollten die LiDAR-Sensoren 14.2 dieses Sensorsystems 13 an der Kabine 8 der landwirtschaftlichen Arbeitsmaschine 1 angeordnet sein. Das an der Kabine 8 angeordnete auf der LiDAR-Technologie basierende Sensorsystem 13 bzw. deren LiDAR-Sensoren 14.2 können dabei, wie in den FIGs. dargestellt, derart angeordnet sein, dass zumindest zwei LiDAR-Sensoren 14.2 in Fahrzeuglängsrichtung rechtsseitig und linksseitig der Kabine 8, vorzugsweise im Bereich der A-Säulen der Kabine 8 sowie in Fahrzeughöhenrichtung im Bereich der unteren Hälfte der Kabine 8, positioniert sind. In einer bevorzugten Ausgestaltung, wie insbesondere in FIG. 2 dargestellt, ist es vorgesehen, dass das auf der LiDAR-Technologie basierende Sensorsystem 13 drei LiDAR-Sensoren 14.2 umfasst. Zwei der drei LiDAR-Sensoren 14.2 sind dabei, wie schon beschrieben, seitlich an der Kabine 8 angeordnet. Der dritte LiDAR-Sensor 14.2 ist auf dem Kabinendach 9 im Frontbereich 10 der Kabine 8 angeordnet.

Sofern ein auf der Kamera-Technologie basierendes Sensorsystem 13 verwendet wird, sollten die Kamera-Sensoren 14.3 dieses Sensorsystems 13 ebenfalls an der Kabine 8 der landwirtschaftlichen Arbeitsmaschine 1 angeordnet sein. Das an der Kabine 8 angeordnete auf der Kamera-Technologie basierende Sensorsystem 13 bzw. deren Kamera-Sensoren 14.3 können dabei, wie in den FIGs. dargestellt, am Kabinendach 9 im Frontbereich 10 und/oder Heckbereich 11 der Kabine 8 angeordnet sein. Vorzugsweise ist vorgesehen, dass das auf der Kamera-Technologie basierende Sensorsystem 13 acht Kamera-Sensoren 14.3 umfasst, von denen fünf Kamera-Sensoren 14.3 in dem Frontbereich 10 der Kabine 8 entlang einer vorderen Dachkante und drei Kamera-Sensoren 14.3 in dem Heckbereich 11 der Kabine 8 entlang einer hinteren Dachkante des Kabinendaches 9 angeordnet sind, wobei zumindest einige von diesen Kamera-Sensoren 14.3 voneinander beabstandet angeordnet sind.

Bei der in den FIGs. dargestellten Ausführungsform umfasst die landwirtschaftliche Arbeitsmaschine 1 genau drei Sensorsysteme 13 mit jeweils mehreren Sensoren 14 zur Detektion von Objekten im Umfeld U der landwirtschaftlichen Arbeitsmaschine 1. Ein erstes Sensorsystem 13 ist dabei ein auf der RaDAR-Technologie basierendes Sensorsystem 13. Dieses ist wie zuvor bereits beschrieben am Chassis 3 angeordnet und umfasst vier RaDAR-Sensoren 14.1, von denen jeweils zwei in Fahrzeuglängsrichtung F_{L} rechtsseitig und linksseitig der Motorhaube 7 an dem frontseitigen Anbaurahmen 15 des Chassis 3 angeordnet sind. Ein zweites Sensorsystem 13 ist ein auf der LiDAR-Technologie basierendes Sensorsystem 13. Dieses Sensorsystem 13 ist an der Kabine 8 angeordnet und umfasst drei LiDAR-Sensoren 14.2, von denen zwei LiDAR-Sensoren 14.2 seitlich im Bereich der A-Säulen der Kabine 8 sowie in Fahrzeughöhenrichtung F_{H} gesehen in der unteren Hälfte der Kabine 8 und ein LiDAR-Sensor 14.2 auf dem Kabinendach 9 im Frontbereich 10 der Kabine 8 angeordnet sind. Ein drittes Sensorsystem 13 ist ein auf der Kamera-Technologie basierendes Sensorsystem 13. Dieses Sensorsystem 13 ist ebenfalls an der Kabine 8 angeordnet und umfasst acht Kamera-Sensoren 14.3. Fünf dieser Kamera-Sensoren 14.3 sind im Frontbereich 10 der Kabine 8 entlang einer vorderen Dachkante 17 angeordnet, wobei zumindest einige von diesen Kamera-Sensoren 14.3 voneinander beabstandet sind. Drei dieser Kamera-Sensoren 14.3 sind im Heckbereich 11 der Kabine 8 entlang einer hinteren Dachkante 18 angeordnet, wobei diese allesamt voneinander beabstandet sind. Die Kamera-Sensoren 14.3, insbesondere die an der vorderen Dachkante angeordneten fünf Kamera-Sensoren 14.3, sind dabei örtlich in der Nähe der LiDAR-Sensoren 14.2 angeordnet und umfassen jeweils ein Sichtfeld ("Field of View" (FOV)) zwischen 90° und 110°, vorzugsweise genau 110°, wodurch sich eine gute Überlappung der nebeneinander angeordneten Kamera-Sensoren 14.3 in den Randbereichen der jeweiligen Sichtfelder ergibt.

Die Sensoren 14 der Sensorsysteme 13, unabhängig von der Anzahl an verwendeten Sensorsystemen 13 und der gewählten Sensortechnologie, können mittels Bügelstrukturen 16 am Chassis 3 oder an der Kabine 8 bzw. am Kabinendach 9 angeordnet sein. Sofern solche Bügelstrukturen 16 vorgesehen sind, sind die Sensoren 14 an den Bügelstrukturen 16 und die Bügelstrukturen 16 entweder am Chassis 3 oder an der Kabine 8 befestigt.

Weiterhin kann es vorgesehen sein, dass die landwirtschaftliche Arbeitsmaschine 1 - in den FIGs. nicht dargestellte - Inertialsensoren ("Inertial Measurement Unit" (IMU)) umfasst, die dazu vorgesehen und eingerichtet sind, Translations- und Rotationsbeschleunigungen der landwirtschaftlichen Arbeitsmaschine 1 zu messen. Sofern solche Inertialsensoren Verwendung finden, ist ein Inertialsensor am Chassis 3 zur Erfassung von Eigenbewegungen des Chassis 3 angeordnet. Ein weiterer Inertialsensor ist an der Kabine 8 zur Erfassung von Eigenbewegungen der Kabine 8 angeordnet. Die Inertialsensoren sind jeweils mit der Steuereinrichtung 12 zur Übertragung von Sensordaten verbunden. Die Steuereinrichtung 12 kann die Sensordaten der Inertialsensoren auswerten und basierend hierauf, die von den Sensoren 14 der Sensorsysteme 13 bereitgestellten Sensordaten in ein globales Koordinatensystem transferieren. Die Berücksichtigung von Eigenbewegungen bei der Auswertung der Sensoren 14 zur Detektion von Objekten im Umfeld U der landwirtschaftlichen Arbeitsmaschine 1 sorgt für eine zuverlässige Detektion von Objekten unter Verwendung mehrerer Sensoren 14 mehrerer Sensorsysteme 13.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

- 1: Landwirtschaftliche Arbeitsmaschine
- 2: Traktor
- 3: Chassis
- 4: Bodeneingriffsmittel
- 5: Vorderachse
- 6: Hinterachse
- 7: Motorhaube
- 8: Kabine
- 9: Kabinendach
- 10: Frontbereich der Kabine
- 11: Heckbereich der Kabine
- 12: Steuereinrichtung
- 13: Sensorsystem
- 14: Sensor
- 14.1: RaDAR-Sensor
- 14.2: LiDAR-Sensor
- 14.3: Kamera-Sensor
- 15: Anbaurahmen
- 16: Bügelstruktur

- F_{L}: Fahrzeuglängsrichtung
- F_{B}: Fahrzeugbreitenrichtung
- F_{H}: Fahrzeughöhenrichtung
- B_{M}: Manueller Betriebsmodus
- B_{A}: Autonomer Betriebsmodus
- U: Umfeld

## Patentansprüche

1. Landwirtschaftliche Arbeitsmaschine (1), insbesondere Traktor (2), mit einem Chassis (3) und einer Kabine (8) mit einem sich vom Frontbereich (10) zum Heckbereich (11) der Kabine (8) erstreckenden Kabinendach (9), wobei die Kabine (8) an dem Chassis (3) angeordnet ist, wobei die landwirtschaftliche Arbeitsmaschine (1) eine Steuereinrichtung (12) umfasst, die dazu vorgesehen und eingerichtet ist, die landwirtschaftliche Arbeitsmaschine (1) in einem autonomen Betriebsmodus (B_{A}) zu betreiben, wobei die landwirtschaftliche Arbeitsmaschine (1) zumindest ein Sensorsystem (13) zur Detektion von Objekten im Umfeld (U) der landwirtschaftlichen Arbeitsmaschine (1) mit mehreren Sensoren (14, 14.1, 14.2, 14.3) umfasst, wobei das zumindest eine Sensorsystem (13) mit der Steuereinrichtung (12) zur Übertragung von Sensordaten verbunden ist, wobei die Steuereinrichtung (12) dazu vorgesehen und eingerichtet ist, die landwirtschaftliche Arbeitsmaschine (1) im autonomen Betriebsmodus (B_{A}) basierend auf den von dem zumindest einen Sensorsystem (13) bereitgestellten Sensordaten anzusteuern, wobei das zumindest eine Sensorsystem (13) auf einer Sensortechnologie basiert und sämtliche Sensoren (14, 14.1, 14.2, 14.3) des zumindest einen Sensorsystems (13) entweder am Chassis (3) oder an der Kabine (8) der landwirtschaftlichen Arbeitsmaschine (1) angeordnet sind **dadurch gekennzeichnet, dass** die Sensoren (14.1) eines auf der RaDar-Technologie basierenden Sensorsystems (13) am Chassis (3) der landwirtschaftlichen Arbeitsmaschine (1) angeordnet sind und die Sensoren (14.2) eines auf der LiDar-Technologie basierenden Sensorsystems (13) an der Kabine (8) der landwirtschaftlichen Arbeitsmaschine (1) angeordnet sind.

2. Landwirtschaftliche Arbeitsmaschine (1) nach Anspruch 1, **dadurch gekennzeichnet, dass** sämtliche Sensoren (14, 14.1, 14.2, 14.3) des zumindest einen Sensorsystems (13) in Fahrzeughöhenrichtung (F_{H}) auf gleicher Höhe angeordnet sind, einen bezogen auf die Fahrzeughöhenrichtung (F_{H}) identischen Neigungswinkel aufweisen und/oder ein identisches Sichtfeld aufweisen.

3. Landwirtschaftliche Arbeitsmaschine (1) nach Anspruch 1 oder 2, **dadurch gekennzeichnet, dass** eine Position der Sensoren (14, 14.1, 14.2, 14.3), eine Ausrichtung der Sensoren (14, 14.1, 14.2, 14.3), ein Sichtfeld der Sensoren (14, 14.1, 14.2, 14.3) und/oder eine Anzahl an Sensoren (14, 14.1, 14.2, 14.3) des zumindest einen Sensorsystems (13) derart abhängig von der Geometrie der landwirtschaftlichen Arbeitsmaschine (1) gewählt ist, dass die Detektion von Objekten im Umfeld (U) der landwirtschaftlichen Arbeitsmaschine (1) in einem Detektionsbereich erfolgt, welcher sich in einem Winkel von 360° um die landwirtschaftliche Arbeitsmaschine (1) herum erstreckt.

4. Landwirtschaftliche Arbeitsmaschine (1) nach Anspruch 2 oder 3, **dadurch gekennzeichnet, dass** das Sichtfeld der Sensoren (14, 14.1, 14.2, 14.3) des zumindest einen Sensorsystems (13) derart gewählt ist, dass sich die Sichtfelder zumindest einiger der Sensoren (14, 14.1, 14.2, 14.3) bereichsweise, vorzugsweise in den Randbereichen, überlappen.

5. Landwirtschaftliche Arbeitsmaschine (1) nach einem der Ansprüche 1 bis 4, **dadurch gekennzeichnet, dass** das zumindest eine Sensorsystem (13) auf einer RaDAR-Technologie, einer LiDAR-Technologie oder einer Kamera-Technologie basiert.

6. Landwirtschaftliche Arbeitsmaschine (1) nach einem der Ansprüche 1 bis 5, **dadurch gekennzeichnet, dass** die Sensoren (14.1) des auf der RaDar-Technologie basierenden Sensorsystems (13) in Fahrzeuglängsrichtung (F_{L}) rechtsseitig und linksseitig einer Motorhaube (7) der landwirtschaftlichen Arbeitsmaschine (1) an einem frontseitigen Anbaurahmen (15) des Chassis (3) angeordnet sind, wobei vorzugsweise das auf der RaDar-Technologie basierende Sensorsystem (13) vier Sensoren (14.1) umfasst, wobei jeweils zwei Sensoren (14.1) in Fahrzeuglängsrichtung (F_{L}) rechtsseitig und linksseitig der Motorhaube (7) an dem frontseitigen Anbaurahmen (15) des Chassis (3) angeordnet sind.

7. Landwirtschaftliche Arbeitsmaschine (1) nach einem der Ansprüche 1 bis 6, **dadurch gekennzeichnet, dass** zumindest zwei Sensoren (14.2) des auf der LiDar-Technologie basierenden Sensorsystems (13) in Fahrzeuglängsrichtung (F_{L}) rechtsseitig und linksseitig der Kabine (8), vorzugsweise im Bereich der A-Säulen der Kabine (8) sowie in Fahrzeughöhenrichtung (F_{H}) im Bereich einer unteren Hälfte der Kabine (8), angeordnet sind, wobei vorzugsweise das auf der LiDar-Technologie basierende Sensorsystem (13) drei Sensoren (14.2) umfasst, wobei ein dritter Sensor (14.2) auf dem Kabinendach (9) im Frontbereich (10) der Kabine (8) angeordnet ist.

8. Landwirtschaftliche Arbeitsmaschine (1) nach einem der Ansprüche 1 bis 7, **dadurch gekennzeichnet, dass** die Sensoren (14.3) eines auf der Kamera-Technologie basierenden Sensorsystems (13) an der Kabine (8) der landwirtschaftlichen Arbeitsmaschine (1) angeordnet sind.

9. Landwirtschaftliche Arbeitsmaschine (1) nach Anspruch 8, **dadurch gekennzeichnet, dass** die Sensoren (14.3) des auf der Kamera-Technologie basierenden Sensorsystems (13) an dem Kabinendach (9) im Frontbereich (10) und/oder Heckbereich (11) der Kabine (8) angeordnet sind, wobei vorzugsweise das auf der Kamera-Technologie basierende Sensorsystem (13) acht Sensoren (14.3) umfasst, von denen fünf Sensoren (14.3) in dem Frontbereich (10) der Kabine (8) entlang einer vorderen Dachkante und drei Sensoren (14.3) in dem Heckbereich (11) der Kabine (8) entlang einer hinteren Dachkante angeordnet sind.

10. Landwirtschaftliche Arbeitsmaschine (1) nach einem der Ansprüche 1 bis 9, **dadurch gekennzeichnet, dass** die landwirtschaftliche Arbeitsmaschine (1) drei Sensorsysteme (13) zur Detektion von Objekten im Umfeld (U) der landwirtschaftlichen Arbeitsmaschine (1) mit jeweils mehreren Sensoren (14, 14.1, 14.2, 14.3) umfasst, wobei ein erstes Sensorsystem (13) auf der RaDar-Technologie, ein zweites Sensorsystem (13) auf der LiDAR-Technologie und ein drittes Sensorsystem (13) auf der Kamera-Technologie basiert, wobei vorzugsweise die Sensoren (14.3) des dritten auf der Kamera-Technologie basierenden Sensorsystems (13) örtlich in der Nähe der Sensoren (14.2) des zweiten auf der LiDAR-Technologie basierenden Sensorsystems (13) angeordnet sind.

11. Landwirtschaftliche Arbeitsmaschine (1) nach einem der Ansprüche 1 bis 10, **dadurch gekennzeichnet, dass** die Sensoren (14, 14.1, 14.2, 14.3) des zumindest einen Sensorsystems (13) mittels einer Bügelstruktur (16) entweder am Chassis (3) oder an der Kabine (8) angeordnet sind.

12. Landwirtschaftliche Arbeitsmaschine (1) nach einem der Ansprüche 1 bis 11, **dadurch gekennzeichnet, dass** die landwirtschaftliche Arbeitsmaschine (1) einen am Chassis (3) angeordneten Inertialsensor zur Erfassung von Eigenbewegungen des Chassis (3) und einen an der Kabine (8) angeordneten Inertialsensor zur Erfassung von Eigenbewegungen der Kabine (8) umfasst, wobei die Inertialsensoren jeweils zur Übertragung von Sensordaten mit der Steuereinrichtung (12) verbunden sind, wobei die Steuereinrichtung (12) dazu vorgesehen und eingerichtet ist, die von den Sensoren (14, 14.1, 14.2, 14.3) des zumindest einen Sensorsystems (13) bereitgestellten Sensordaten anhand der Sensordaten der Inertialsensoren in ein globales Koordinatensystem zu transferieren.

## Claims

1. Agricultural working machine (1), in particular tractor (2), having a chassis (3) and a cab (8) with a cab roof (9) extending from the front region (10) to the rear region (11) of the cab (8), wherein the cab (8) is arranged on the chassis (3), wherein the agricultural working machine (1) comprises a control device (12) which is provided and configured to operate the agricultural working machine (1) in an autonomous operating mode (B_{A}), wherein the agricultural working machine (1) comprises at least one sensor system (13) for detecting objects in the environment (U) of the agricultural working machine (1) using a plurality of sensors (14, 14.1, 14.2, 14.3), wherein the at least one sensor system (13) is connected to the control device (12) for transmitting sensor data, wherein the control device (12) is provided and configured to activate the agricultural working machine (1) in the autonomous operating mode (B_{A}) based on the sensor data provided by the at least one sensor system (13), wherein the at least one sensor system (13) is based on sensor technology and all of the sensors (14, 14.1, 14.2, 14.3) of the at least one sensor system (13) are arranged either on the chassis (3) or on the cab (8) of the agricultural working machine (1), **characterized in that** the sensors (14.1) of a sensor system (13) based on radar technology are arranged on the chassis (3) of the agricultural working machine (1) and the sensors (14.2) of a sensor system (13) based on lidar technology are arranged on the cab (8) of the agricultural working machine (1).

2. Agricultural working machine (1) according to Claim 1, **characterized in that** all of the sensors (14, 14.1, 14.2, 14.3) of the at least one sensor system (13) are arranged at the same height in the vehicle vertical direction (F_{H}), have an identical inclination angle relative to the vehicle vertical direction (F_{H}) and/or have an identical field of view.

3. Agricultural working machine (1) according to Claim 1 or 2, **characterized in that** a position of the sensors (14, 14.1, 14.2, 14.3), an orientation of the sensors (14, 14.1, 14.2, 14.3), a field of view of the sensors (14, 14.1, 14.2, 14.3) and/or a number of sensors (14, 14.1, 14.2, 14.3) of the at least one sensor system (13) is selected, depending on the geometry of the agricultural working machine (1), in such a way that objects in the environment (U) of the agricultural working machine (1) are detected in a detection region which extends around the agricultural working machine (1) at an angle of 360°.

4. Agricultural working machine (1) according to Claim 2 or 3, **characterized in that** the field of view of the sensors (14, 14.1, 14.2, 14.3) of the at least one sensor system (13) is selected in such a way that the fields of view of at least some of the sensors (14, 14.1, 14.2, 14.3) overlap in regions, preferably in the edge regions.

5. Agricultural working machine (1) according to any of Claims 1 to 4, **characterized in that** the at least one sensor system (13) is based on radar technology, lidar technology or camera technology.

6. Agricultural working machine (1) according to any of Claims 1 to 5, **characterized in that** the sensors (14.1) of the sensor system (13) based on radar technology are arranged on the right-hand side and left-hand side of an engine hood (7) of the agricultural working machine (1) in the vehicle longitudinal direction (F_{L}) on a front-side mounting frame (15) of the chassis (3), wherein preferably the sensor system (13) based on radar technology comprises four sensors (14.1), wherein two sensors (14.1) are arranged on both the right-hand side and left-hand side of the engine hood (7) in the vehicle longitudinal direction (F_{L}) on the front-side mounting frame (15) of the chassis (3).

7. Agricultural working machine (1) according to any of Claims 1 to 6, **characterized in that** at least two sensors (14.2) of the sensor system (13) based on lidar technology are arranged on the right-hand side and left-hand side of the cab (8) in the vehicle longitudinal direction (F_{L}), preferably in the region of the A-pillars of the cab (8) and in the region of a lower half of the cab (8) in the vehicle vertical direction (F_{H}), wherein preferably the sensor system (13) based on lidar technology comprises three sensors (14.2), wherein a third sensor (14.2) is arranged on the cab roof (9) in the front region (10) of the cab (8).

8. Agricultural working machine (1) according to any of Claims 1 to 7, **characterized in that** the sensors (14.3) of a sensor system (13) based on camera technology are arranged on the cab (8) of the agricultural working machine (1).

9. Agricultural working machine (1) according to Claim 8, **characterized in that** the sensors (14.3) of the sensor system (13) based on camera technology are arranged on the cab roof (9) in the front region (10) and/or rear region (11) of the cab (8), wherein preferably the sensor system (13) based on camera technology comprises eight sensors (14.3), five of which sensors (14.3) are arranged in the front region (10) of the cab (8) along a front roof edge and three of which sensors (14.3) are arranged in the rear region (11) of the cab (8) along a rear roof edge.

10. Agricultural working machine (1) according to any of Claims 1 to 9, **characterized in that** the agricultural working machine (1) comprises three sensor systems (13) for detecting objects in the environment (U) of the agricultural working machine (1), each sensor system having a plurality of sensors (14, 14.1, 14.2, 14.3), wherein a first sensor system (13) is based on radar technology, a second sensor system (13) is based on lidar technology and a third sensor system (13) is based on camera technology, wherein preferably the sensors (14.3) of the third sensor system (13) based on camera technology are arranged close to the sensors (14.2) of the second sensor system (13) based on lidar technology.

11. Agricultural working machine (1) according to any of Claims 1 to 10, **characterized in that** the sensors (14, 14.1, 14.2, 14.3) of the at least one sensor system (13) are arranged either on the chassis (3) or on the cab (8) by means of a bracket structure (16).

12. Agricultural working machine (1) according to any of Claims 1 to 11, **characterized in that** the agricultural working machine (1) comprises an inertial sensor arranged on the chassis (3) for detecting intrinsic movements of the chassis (3) and an inertial sensor arranged on the cab (8) for detecting intrinsic movements of the cab (8), wherein the inertial sensors are each connected to the control device (12) for transmitting sensor data, wherein the control device (12) is provided and configured to transfer the sensor data provided by the sensors (14, 14.1, 14.2, 14.3) of the at least one sensor system (13) into a global coordinate system based on the sensor data of the inertial sensors.

## Revendications

1. Machine de travail agricole (1), en particulier tracteur (2), avec un châssis (3) et avec une cabine (8) avec un toit (9) de cabine s'étendant depuis la zone avant (10) à la zone arrière (11) de la cabine (8), la cabine (8) étant disposée sur le châssis (3), la machine de travail agricole (1) comprenant un dispositif de commande (12), qui est prévu et mis au point pour faire fonctionner la machine de travail agricole (1) dans un mode de fonctionnement autonome (B_{A}), la machine de travail agricole (1) comprenant au moins un système de détection (13) pour détecter des objets dans l'environnement (U) de la machine de travail agricole (1) avec plusieurs capteurs (14, 14.1, 14.2, 14.3), l'au moins un système de détection (13) étant relié au dispositif de commande (12) pour la transmission de données de capteur, le dispositif de commande (12) étant prévu et mis au point pour piloter la machine de travail agricole (1) dans le mode de fonctionnement autonome (B_{A}) sur la base des données de capteur fournies par l'au moins un système de détection (13), l'au moins un système de détection (13) se basant sur une technologie de capteurs et tous les capteurs (14, 14.1, 14.2, 14.3) de l'au moins un système de détection (13) étant disposés soit sur le châssis (3), soit sur la cabine (8) de la machine de travail agricole (1), **caractérisée en ce que** les capteurs (14.1) d'un système de détection (13) basé sur la technologie radar sont disposés sur le châssis (3) de la machine de travail agricole (1) et les capteurs (14.2) d'un système de détection (13) basé sur la technologie lidar sont disposés sur la cabine (8) de la machine de travail agricole (1).

2. Machine de travail agricole (1) selon la revendication 1, **caractérisée en ce que** tous les capteurs (14, 14.1, 14.2, 14.3) de l'au moins un système de détection (13) sont disposés à la même hauteur dans le sens de la hauteur du véhicule (F_{H}), présentent un angle d'inclinaison identique par rapport au sens de la hauteur du véhicule (F_{H}) et/ou présentent un champ de vision identique.

3. Machine de travail agricole (1) selon la revendication 1 ou 2, **caractérisée en ce qu'**une position des capteurs (14, 14.1, 14.2, 14.3), une orientation des capteurs (14, 14.1, 14.2, 14.3), un champ de vision des capteurs (14, 14.1, 14.2, 14.3) et/ou un nombre de capteurs (14, 14.1, 14.2, 14.3) de l'au moins un système de détection (13) sont choisis en fonction de la géométrie de la machine de travail agricole (1) de telle manière que la détection d'objets dans l'environnement (U) de la machine de travail agricole (1) a lieu dans une zone de détection, qui s'étend autour de la machine de travail agricole (1) à un angle de 360°.

4. Machine de travail agricole (1) selon la revendication 2 ou 3, **caractérisée en ce que** le champ de vision des capteurs (14, 14.1, 14.2, 14.3) de l'au moins un système de détection (13) est choisi de telle manière que les champs de vision au moins de certains des capteurs (14, 14.1, 14.2, 14.3) se chevauchent par endroits, de préférence dans les zones de bord.

5. Machine de travail agricole (1) selon l'une des revendications 1 à 4, **caractérisée en ce que** l'au moins un système de détection (13) se base sur une technologie radar, une technologie lidar ou une technologie de caméra.

6. Machine de travail agricole (1) selon l'une des revendications 1 à 5, **caractérisée en ce que** les capteurs (14.1) du système de détection (13) basé sur la technologie radar sont disposés dans le sens de la longueur du véhicule (F_{L}) à droite et à gauche d'un capot moteur (7) de la machine de travail agricole (1) sur un cadre de montage (15) côté avant du châssis (3), le système de détection (13) basé sur la technologie radar comprenant de préférence quatre capteurs (14.1), deux capteurs (14.1) étant respectivement disposés dans le sens de la longueur du véhicule (F_{L}) à droite et à gauche du capot moteur (7) sur le cadre de montage (15) côté avant du châssis (3).

7. Machine de travail agricole (1) selon l'une des revendications 1 à 6, **caractérisée en ce qu'**au moins deux capteurs (14.2) du système de détection (13) basé sur la technique lidar sont disposés dans le sens de la longueur du véhicule (F_{L}) à droite et à gauche de la cabine (8), de préférence dans la zone des montants A de la cabine (8) ainsi que dans le sens de la hauteur du véhicule (F_{H}) dans la zone d'une moitié inférieure de la cabine (8), le système de détection (13) basé sur la technologie lidar comprenant de préférence trois capteurs (14.2), un troisième capteur (14.2) étant disposé sur le toit (9) de cabine dans la zone avant (10) de la cabine (8).

8. Machine de travail agricole (1) selon l'une des revendications 1 à 7, **caractérisée en ce que** les capteurs (14.3) d'un système de détection (13) basé sur la technologie de caméra sont disposés sur la cabine (8) de la machine de travail agricole (1).

9. Machine de travail agricole (1) selon la revendication 8, **caractérisée en ce que** les capteurs (14.3) du système de détection (13) basé sur la technologie de caméra sont disposés sur le toit (9) de cabine dans la zone avant (10) et/ou dans la zone arrière (11) de la cabine (8), le système de détection (13) basé sur la technologie de caméra comprenant de préférence huit capteurs (14.3), dont cinq capteurs (14.3) sont disposés dans la zone avant (10) de la cabine (8) le long d'un bord de toit avant et trois capteurs (14.3) sont disposés dans la zone arrière (11) de la cabine (8) le long d'un bord de toit arrière.

10. Machine de travail agricole (1) selon l'une des revendications 1 à 9, **caractérisée en ce que** la machine de travail agricole (1) comprend trois systèmes de détection (13) pour détecter des objets dans l'environnement (U) de la machine de travail agricole (1) avec chacun plusieurs capteurs (14, 14.1, 14.2, 14.3), un premier système de détection (13) se basant sur la technologie radar, un deuxième système de détection (13) se basant sur la technologie lidar et un troisième système de détection (13) se basant sur la technologie de caméra, les capteurs (14.3) du troisième système de détection (13) basé sur la technologie de caméra étant de préférence disposés localement à proximité des capteurs (14.2) du deuxième système de détection (13) basé sur la technologie lidar.

11. Machine de travail agricole (1) selon l'une des revendications 1 à 10, **caractérisée en ce que** les capteurs (14, 14.1, 14.2, 14.3) de l'au moins un système de détection (13) sont disposés soit sur le châssis (3), soit sur la cabine (8) au moyen d'une structure de support (16).

12. Machine de travail agricole (1) selon l'une des revendications 1 à 11, **caractérisée en ce que** la machine de travail agricole (1) comprend un capteur inertiel, disposé sur le châssis (3) pour détecter des mouvements propres du châssis (3) et un capteur inertiel disposé sur la cabine (8) pour détecter des mouvements propres de la cabine (8), les capteurs inertiels étant reliés chacun au dispositif de commande (12) pour la transmission de données de capteur, le dispositif de commande (12) étant prévu et mis au point pour transférer les données de capteur fournies par les capteurs (14, 14.1, 14.2, 14.3) de l'au moins un système de détection (13) dans un système de coordonnées global à l'aide des données de capteur des capteurs inertiels.
